# EUROPEAN PATENT APPLICATION

(11) **EP 1 193 595 A2**
(43) Date of publication of application: **03.04.2002**
(21) Application number: 01121840.1
(22) Date of filing: 11.09.2001
(51) Int. Cl.: G06F 9/50

(54) **Method of distributing a spare time of CPU and system for performing the method**

(30) Priority: 11.09.2000 JP 2000275116
(71) Applicant: NEC CORPORATION, Tokyo (JP)
(72) Inventor: Nagato, Masaki, c/o NEC Corporation, Tokyo (JP)
(74) Representative: Glawe, Delfs, Moll & Partner

(57) **Abstract**

A CPU time distribution system includes a plurality of terminals used by resource buyers, a plurality of computers used by resource suppliers, and a managing server which connected to the terminals and the computers via a network. The managing server receives from the terminal, a request for an unused CPU processing time of the computers of the resource supplier. The request includes an identifier, for example a name, of a program which the resource buyer requires executing on the computer. The server further receives from the computers, a response for the request by the terminals. Then the server sends the program to the computer, when the computer sends a notification of an application for the request. The program is executed on the computer and the executing results of the program are sent to the terminal of the requesting resource buyer in exchange for a payment.

## Description

### BACKGROUND OF THE INVENTION:

### Field of the Invention

The invention relates to a method of distributing or trading (buying and selling) CPU resources, namely, spare times left unused in CPUs which are scattered on a network, in particular, a method of using a hardware resource to embody the distribution.

### Description of the Related Art

As regards processing a moving image or movie, recent attention has been focused on a technique of executing single processing at a plurality of distributed nodes. Such a technique is referred to as "clustering technology".

Also, it is also known in the art that a multi processor system has a plurality of processors housed in a single computer body.

However, it is expensive to construct or assemble the multi processor system to process the movie. Further, after the assembly, a huge running cost is required to maintain the system.

Also, nowadays, a large number of computers such as personal computers and workstations are connected to the Internet in a distributed manner. And the computers are not always operating all day long and, as a result, there is a large amount of spare time that CPUs of the computers are left unused. This tendency is more conspicuous in the computers for personal use.

Although performance of each of these computers is extremely low, it is possible to provide an amazingly high processing ability by summing up the individual performance of each computer.

However, any idea to effectively use the unused CPU resources has not been proposed. And of course, there has no system to realize the idea.

Further, since performance of a computer is outdated in about a year or a half year, a huge cost is required to maintain the highest performance processing CPU environment. In this case, it is possible to reduce the maintenance cost if an unused CPU time or spare time of the computer is shared with other users and a consideration for the CPU time is obtained to compensate for a part of the maintenance cost.

But, there is no idea of such the compensation (or collection) of the maintenance cost, and therefore a system to realize the compensation is not provided.

### SUMMARY OF THE INVENTION:

Therefore, it is an object of the invention to provide a method of buying and selling of a processing time or a spare time by using a CPU (fostering distribution of a processing time).

Further, it is another object of the invention to provide a system to perform the method by using hardware resources.

According to the invention, a CPU time distributing method and a CPU time distribution system are provided to overcome the above-mentioned problems. Also, for the system, definition is made about a managing server which is capable of performing the method of the invention.

According to a first aspect of the invention, there is provided a method of distributing a CPU spare time as a computer resource via a network. The method comprises the steps of (1) displaying, at a terminal of a resource buyer who demands to buy the CPU resource, a request form used to enter request items including an identifier of a program which the resource buyer requires executing, (2) storing the request items into a database when the request items are entered into the request form, (3) indicating, at each computer of resource supplier who demands to sell the CPU resource, the request items for each request and allowing the resource supplier to apply for a request, and (4) providing the program to the computers of the resource supplier applying the request.

According to a second aspect of the invention, there is provided a method of distributing a CPU spare time as a computer resource via a network. The method comprises the steps of (1) displaying, at a terminal of a resource buyer who demands to buy the CPU resource, a request form used to enter request items including an identifier of a program which the resource buyer requires executing, (2) storing the request items into a first database when the request items are entered into the request form, (3) determining resource supplier's computers which are suitable to execute the program, by referring to the first database and a second database including a CPU supply condition and an address of each computer of the resource supplier, and (4) providing the program to be executed to the determined computers by using the addresses of the computers.

According to a third aspect of the invention, there is provided a method of distributing a CPU spare time as a computer resource via a network. The method comprises the steps of (1) displaying, at a terminal of a resource buyer who demands to buy the CPU resource, a request form used to enter request items including an identifier of a program which the resource buyer requires executing, (2) storing the request items into a first database when the request items are entered into the request form, (3) issuing an agent program which cyclically moves over computers of resource suppliers via the network by using addresses of the computers, and which determines the computers which are suitable to execute the program by referring to the first database and a second database which is resided in each computer and includes a CPU supply condition of the corresponding computer, and (4) providing the program to be executed to the determined computers by using the addresses of the computers.

According to a fourth aspect of the invention, there is provided a managing server which controls a CPU time distribution service and which is connected to terminals each of which is possessed by a resource buyer and computers each of which is possessed by a resource supplier via a network, in a CPU time distribution system which controls buying and selling of an unused CPU time of the computer by using the network. The server comprises (1) a displaying unit which displays a request form, at the terminal, to foster inputting of request items including an identifier of a program which the resource buyer requires executing on the computer, (2) a database which stores the request items, (3) an indicating unit which sends the request items to the computers to indicate them, (4) a receiving unit which receives a response for a request represented by the request items from the computer, and (5) a providing unit which provides the program to the computer, when the computer sends a notification of an application for the request.

According to a fifth aspect of the invention, there is provided a managing server which controls a CPU time distribution service and which is connected to terminals each of which is possessed by a resource buyer and computers each of which is possessed by a resource supplier via a network, in a CPU time distribution system which controls buying and selling of an unused CPU time of the computer by using the network. The server comprises (1) a first database which stores, in advance, a CPU supply condition and an address of each computer of the resource supplier, (2) a displaying unit which displays a request form, at the terminal, to foster inputting of request items including an identifier of a program which the resource buyer requires executing on the computer, (3) a second database which stores the request items when the request items are entered into the request form, (4) a determining unit which determines resource supplier's computers which are suitable to execute the program, by referring to the first database and the second database, and (5) a providing unit which provides the program to be executed to the determined computers by using the addresses of the computers.

According to a sixth aspect of the invention, there is provided a managing server which controls a CPU time distribution service and which is connected to terminals each of which is possessed by a resource buyer and computers each of which is possessed by a resource supplier via a network, in a CPU time distribution system which controls buying and selling of an unused CPU time of the computer by using the network. The server comprises (1) a first database which stores, in advance, an address of each computer, (2) a displaying unit which displays, at a terminal, a request form used to foster inputting of request items including an identifier of a program which the resource buyer requires executing on the computer, (3) a second database which stores the request items when the request items are entered into the request form, (4) a third database which is resided in each computer and stores a CPU supply condition of the corresponding computer, (5) an issuing unit which issues an agent program which cyclically moves over computers of resource suppliers via the network by retrieving addresses of the computers from the first database, and which determines the computers which are suitable to execute the program by referring to the second database and the third database, and (6) a providing unit which provides the program to be executed to the determined computers by using the addresses of the computers.

According to a seventh aspect of the invention, there is provided a recording medium readable by a computer, tangibly embodying a program of instructions executable by the computer to perform a method of controlling distribution of a CPU time via a network. The method comprises the steps of (1) displaying, at a terminal of a resource buyer who demands to buy the CPU resource, a request form used to enter request items including an identifier of a program which the resource buyer requires executing, (2) storing the request items into a database when the request items are entered into the request form, (3) indicating, at each computer of resource supplier who demands to sell the CPU resource, the request items for each request and allowing the resource supplier to apply for a request, and (4) providing the program to the computers of the resource supplier applying the request.

According to a eighth aspect of the invention, there is provided a computer data signal embodied in a carrier wave and representing a sequence of instructions which, when executed by a processor, cause the processor to perform a method of controlling distribution of a CPU time via a network. The method comprises the steps of (1) displaying, at a terminal of a resource buyer who demands to buy the CPU resource, a request form used to enter request items including an identifier of a program which the resource buyer requires executing, (2) storing the request items into a database when the request items are entered into the request form, (3) indicating, at each computer of resource supplier who demands to sell the CPU resource, the request items for each request and allowing the resource supplier to apply for a request, and (4) providing the program to the computers of the resource supplier applying the request.

### BRIEF DESCRIPTION OF THE DRAWINGS:

Fig. 1 shows a diagram representing a construction of a CPU time distribution (namely, a CPU spare time trading) system according to a first embodiment of the invention;
Fig. 2 shows flows for use in describing operation of the system shown in Fig. 1;
Fig. 3 shows an example of a request form displayed on a monitor;
Fig. 4 shows an example of a list of requests displayed on a monitor;
Fig. 5 shows an example of an application form displayed on a monitor;
Fig. 6 shows a diagram representing a construction of a CPU time distribution system according to a second embodiment of the invention;
Fig. 7 shows flows of processing of the system shown in Fig. 6;
Fig. 8 shows a diagram representing a construction of a CPU time distribution system according to a third embodiment of the invention; and
Fig. 9 shows flows of processing of the system shown in Fig. 8.

### DESCRIPTION OF THE PREFERRED EMBODIMENT:

### [First Embodiment]

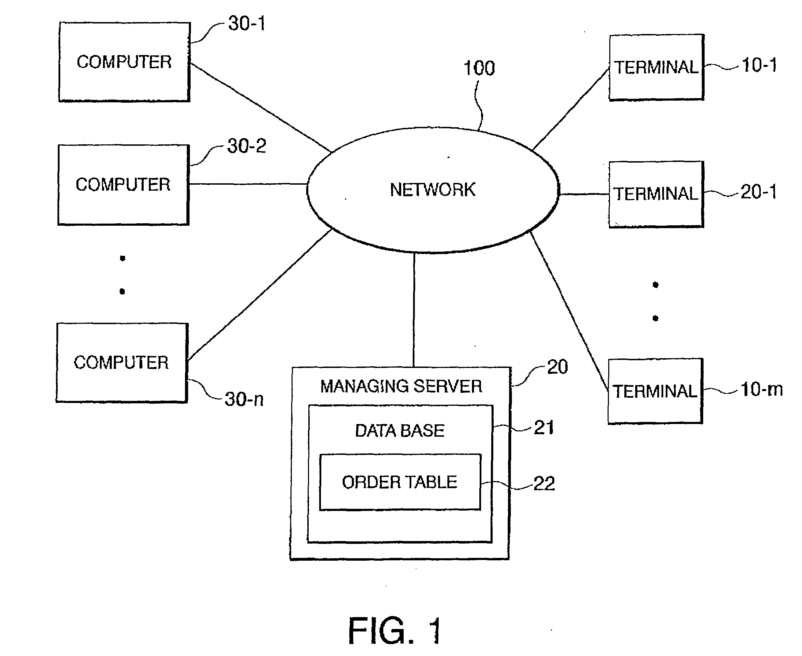

As shown in Fig. 1, a CPU time distribution system according to a first embodiment includes terminals 10-1 through 10-m, a managing server 20, computers 30-1 through 30-n, and a communication network 100 connecting between the above elements. Each of the terminals 10-1 through 10-m is used by a resource buyer who buys a CPU processing time or a CPU spare time, and is located at a place where the resource buyer can manipulate the terminal. On the other hand, each of the computers 30-1 through 30-n is possessed by a resource supplier who supplies or sells a CPU processing time.

Further, a managing server 20 is managed by a service manager who manages a CPU processing time distribution (buying and selling) service, and stores requests from the resource buyer and processing results at the resource supplier's computers. Also, the communication network 100 is, for example, the Internet.

Specifically, one of the terminals 10-1 through 10-m accesses the managing server 20, and requests the CPU processing time distribution service which is provided by the managing server 20, in response to the resource buyer's instruction. In more detail, the terminal receives a request form to input request items about buying a CPU processing time from the managing server 20, and displays the request form on a display. Then, the resource buyer enters required items into the displayed request form, and the terminal sends the entered items to the managing server as request items.

Herein, the request items include a program name to be executed, an Operating System providing an executing environment of the program, payments on processing results, a standard processing time which is expected when a process is executed in a standard type of computer, the number of computers required to execute the process, and a request period. Also, each of the computers 10-1 through 10-m has a function to send the program to be executed to the managing server 20, in addition to the request items. Further, each of the terminals 10-1 through 10-m can refer to or download, via the network 100, the processing results which are uploaded to the managing server 20 by the resource supplier.

Each of the terminals 10-1 through 10-m may include a CPU, a memory, and an external storage device, and may be an information processing device which can perform computations. Therefore, any machine from a low-grade machine such as a personal computer to a high-grade machine such as a super computer may be used. Further, there is no restriction about performance of the CPU of the terminals.

The managing server 20 sends the request form to the terminals as described above, and stores the request items from the resource buyer into an order table 22 in a database 21. And the managing server 20 stores the program which is uploaded when the request items are sent, into the database 21. Also, the managing server 20 has a function to provide an application form used to collect a resource supplier supplying a CPU processing time on a homepage. Further, the managing server 20 registers processing results from the resource supplier into the database 21 and sends the processing results to the resource buyer via the terminal.

Thus, the managing server 20 is, for example, composed of an information processing device with the database 21 such as a workstation server.

Each of the computers 30-1 through 30-n accesses the managing server 20 via the network 100, and refers to request items requesting a CPU processing time to execute a program. The program is downloaded from the database 21 in the managing server 20, when the computer applies for (responds to) the request.

Also, each of the computers 30-1 through 30-n executes the program downloaded from the managing server 20 and uploads processing results of the execution to the managing server 20.

Similar to the terminals, each of the computers 30-1 through 30-n includes a CPU, a memory, and an external storage device, and is enough to be an information processing device which is capable of performing computations. And there is no restriction about performance of the computers.

Next, description is made in more detail about operations of the CPU time distribution system according to the first embodiment of the invention, with reference to Figs. 1 to 5.

Also, the following description is made on the assumption that the network 100 is the Internet. Further, it is assumed that a www browser is operating on the terminal 10 and the computer 30, information from the managing server 20 is displayed on a monitor by the www browser, thereby the resource buyer and the resource supplier can see the received information. Furthermore, it is assumed that the terminal 10 is manipulated by the resource buyer and the computer 30 is manipulated by the resource supplier. In this event, it is also assumed that any other person does not manipulates the computer.

That is, operations which are described with a term "terminal 10" as the subject are basically done by instructions (manipulations) of the resource buyer, and operations which are described with a term "computer 30" as the subject are basically done by instructions of the resource supplier.

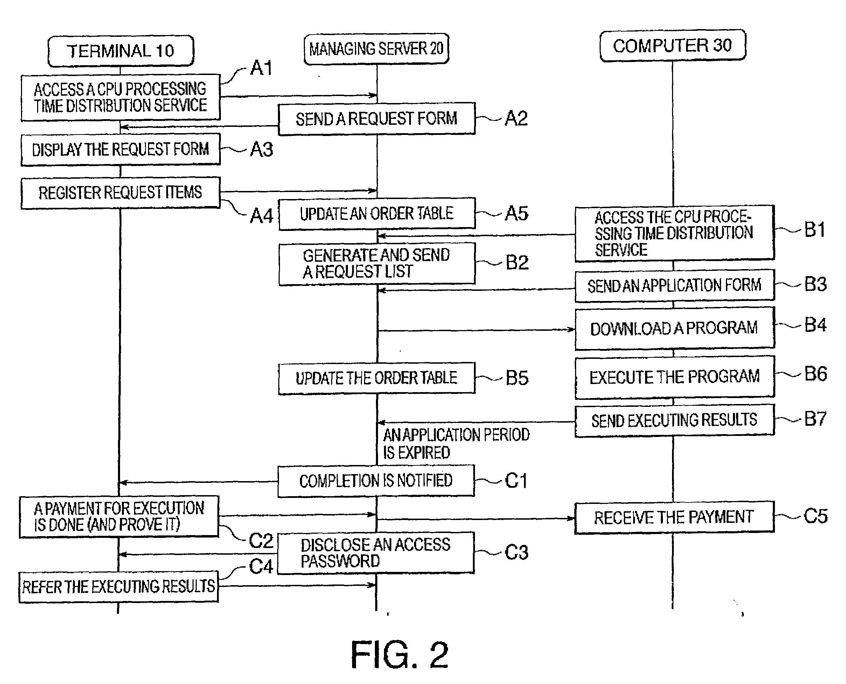

As shown in Fig. 2, the terminal 10 accesses a homepage which is provided on the Internet and represents information about a CPU processing time distribution service, and selects a service for a resource buyer (step A1). In response to the selection, the managing server 20 sends a request form to prompt to input items required for buying a CPU processing time, to the terminal 10 (step A2). In this embodiment, the request form sent to the terminal 10 includes HTML data, XML data, and image data related to the HTML data and the XML data. Also, on sending the request form, an SSL connection may be established and subsequent procedure may be done with a certain security level using the SSL connection.

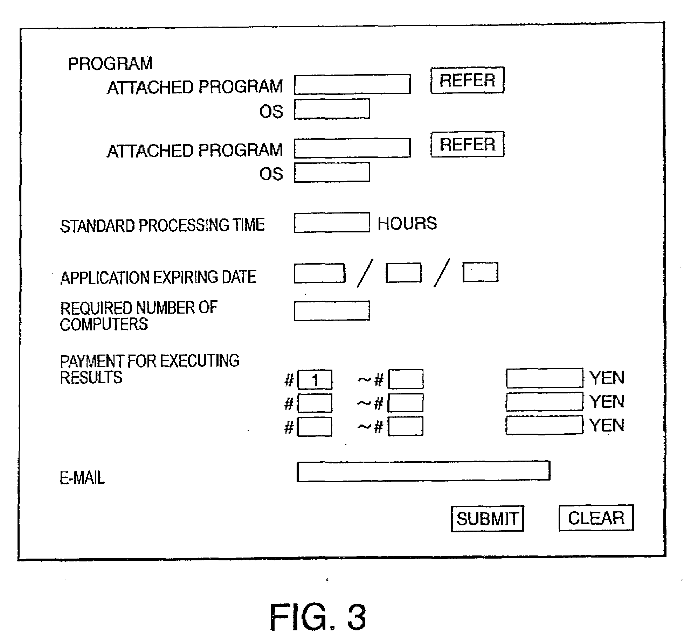

After the managing server 20 sends the request form to the terminal 10, the www browser running at terminal 10 shows the request form on a monitor as shown in Fig. 3 (step A3).

When the request form is displayed on the monitor, the resource buyer enters required items to the form. In this embodiment, the required items are, for example, a program name to be executed, an Operating System providing an executing environment of the program, a standard processing time, a request receiving period, the number of computers required to execute the program, payments on processing results, and an E-mail address used to inform of buying the processing results. The program name can be entered by clicking a reference button displayed on the monitor. Specifically, when the reference button is clicked, names of programs residing in the resource buyer's computer (local environment) are listed on the display by using a function of the browser. Then, the resource buyer selects a program name in the list by using an input device such as a mouse, and the selected program name is entered to an input area of the program name in the request form.

When the required items are entered into the request form as described above, the terminal 10 uploads the entered items to the managing server 20. Also, a program corresponding to the program name entered into the request form is uploaded to the managing server 20 simultaneously. Then the uploaded items and the program are registered or stored to the managing server 20 (step A4). The uploaded required items, that is, request items are stored as order information about buying a CPU processing time, in the order table 22 in the database 21.

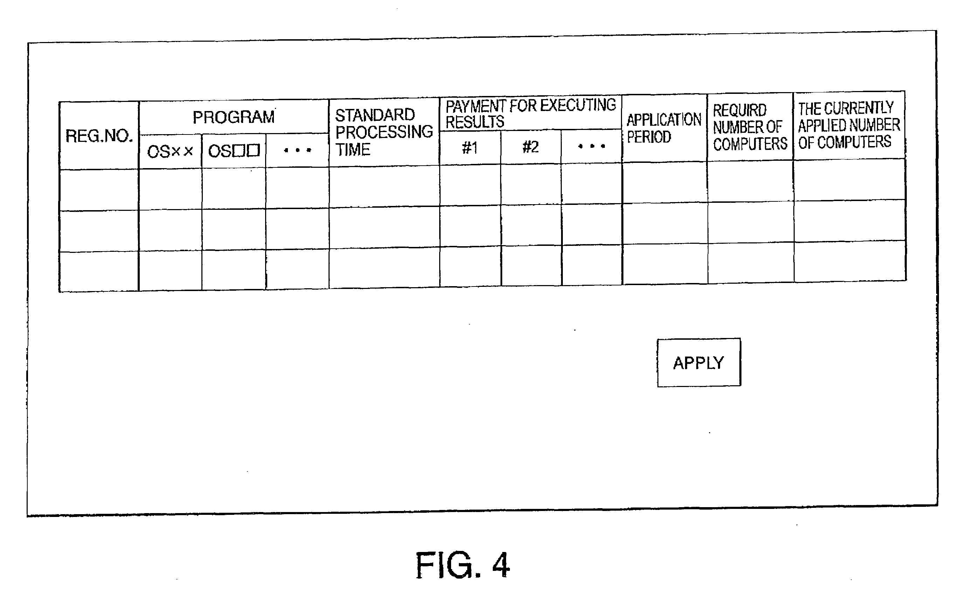

The computer 30 accesses a homepage providing a distribution service of a CPU processing time, and selects a button related to a service for a resource supplier (step B1). In response to the selection, the managing server 20 searches the order table 22 and produces a list including currently effective requests for a CPU processing time. Then, the list is sent to the computer 30 (step B2). When the managing server 20 thus sends the list to the computer 30, a www browser running on the computer 30 displays the list in a manner as shown in Fig. 4.

After that, the resource supplier looks at the list displayed by the www browser, and determines and selects a request that is capable of being executed in consideration of a processing ability of the computer of the resource supplier and existence of an unused time. Further, when the resource supplier selects the request, the resource supplier clicks an apply button shown in Fig. 4. When the apply button is clicked, the managing server 20 sends an application form to the computer 30. When the computer 30 receives the form, the www browser running on the computer 30 displays the form on the monitor of the computer 30.

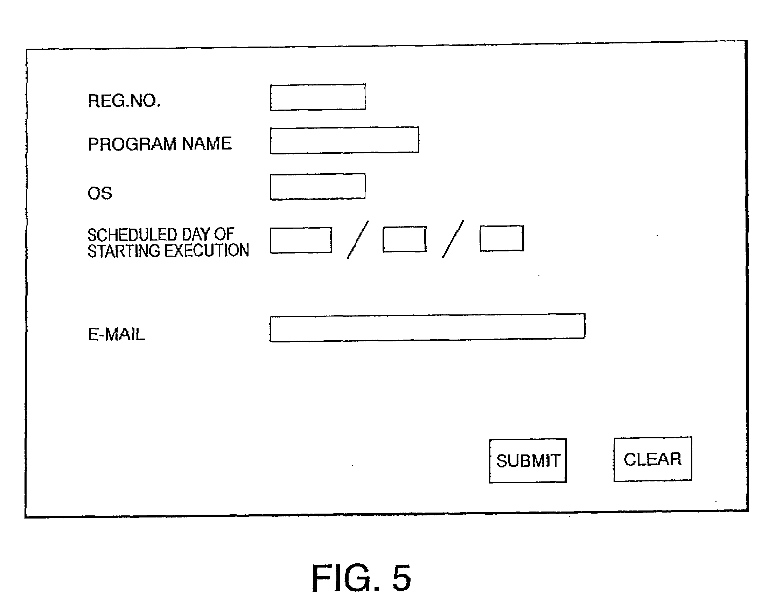

When the application form is displayed on the monitor of the computer 30, the resource supplier enters required items into the application form and then clicks a submit button displayed by the www browser and shown in Fig. 5. After clicking the submit button, the computer 30 sends the entered items of the application form to the managing server 20 (step B3). Further, a program to be executed is downloaded from the managing server 20 to the computer 30 (step B4).

Thus, the managing server 20 receives the items of the application (the application for the request). As shown in Fig. 3, the required number of the computers to execute the program is designated by the resource buyer via the request form. The required number is then stored in the order table 22.

Therefore, the managing server 20 updates the required number stored in the order table 22 (step B5) in response to the application. That is, when the server 20 receives a single application, the required number stored in the order table 22 is decreased by one. When the required number is updated to zero, further application is not received by the managing server 20.

Then, the computer 30 executes the program downloaded from the managing server 20 (step B6), and sends executing results to the managing server 20 in a form of an electronic file (step B7).

When an application period is established for each request from the resource buyer, the managing server 20 determines effectiveness of the executing results of the request when the application period corresponding to the request expires. A plurality of executing results may be obtained for a single request and generally, the plurality of executing results are coincident with each other if the program is executed in the same environment. Further, the managing server 20 notifies the terminal 10 of the resource buyer that executing of the request is completed when the application period of the request expires and executing results of the request is obtained (step C1). In this case, to notify the completion to the resource buyer, electronic mail (E-mail) can be used.

When the resource buyer receives the notification from the managing server 20, the resource buyer pays a fee for the executing (processing) to a service manager (step C2). Various methods of payment can be allowed. For example, payment through a bank or a post office, or payment using a credit card can be used.

When the service manager confirms the payment from the resource buyer, the processing results of the program are disclosed on the server 20. In this embodiment, the resource buyer receives a password from the service manager (step C3) and can access the disclosed processing result by only using the password (step C4).

In addition, the service manager pays a fee for the executing program to the resource supplier (step C5). The payment is done, for example, by remitting a predetermined amount of money to a designated bank account of the resource supplier, but other method of payment can be adopted.

Then, a part of the amount of money remitted from the resource buyer is distributed to resource suppliers who apply the resource buyer's request and execute the program for the resource buyer. In this embodiment, a larger amount of money can be distributed to the resource supplier who returns the processing results to the managing server 20 at earlier timing. As shown in Fig. 4, an amount of money to be distributed to the resource supplier is predetermined for each order that the processing results are returned.

### [Second Embodiment]

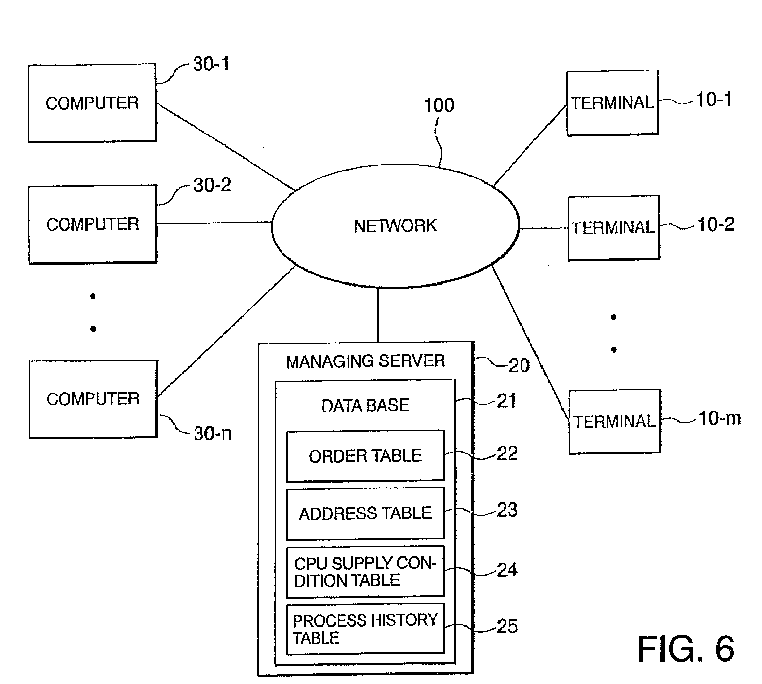

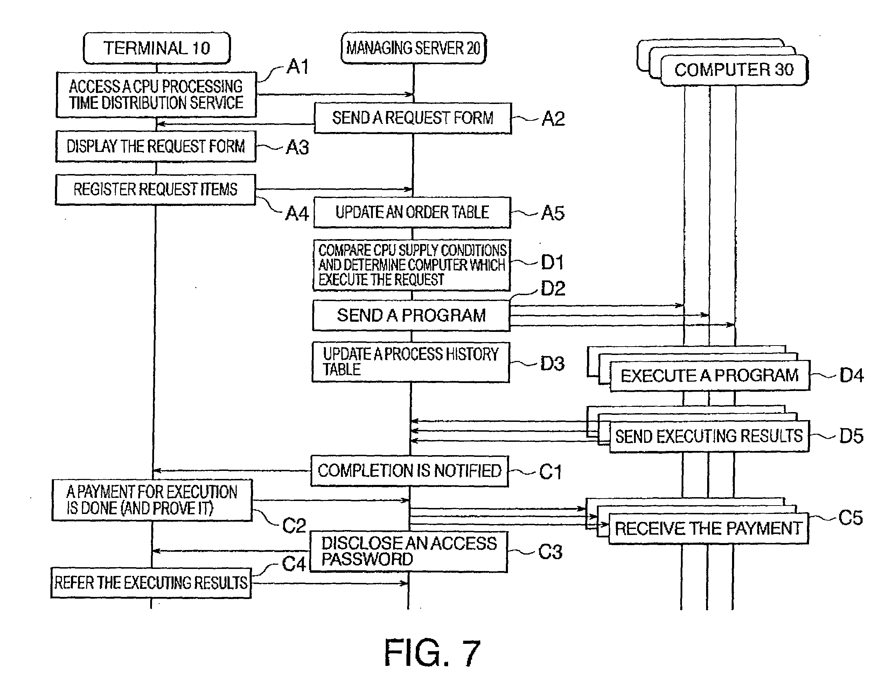

The second embodiment of the CPU processing time distribution system according to the invention is a variation of the first embodiment of the invention. Therefore, description is made about the different points between the above two embodiments, with reference to Figs. 6 and 7.

In this embodiment, resource suppliers who intend to use a CPU processing time distribution service are registered to a service manager in advance. By the registration, an address (a network address) of the computer of the resource supplier is stored in the managing server 20 of the service manager. Therefore, when the resource buyer sends a request for executing a program to the managing server 20, the managing server 20 can automatically request the execution to a computer of the registered resource supplier even if the resource supplier does not expressly apply an application for the execution. To this end, it is required that when the managing server 20 requests the execution to the computer of the resource supplier, the managing server 20 can access the computer via a network.

As shown in Fig. 6, the second embodiment of the CPU processing time distribution system includes terminals 10-1 through 10-m which are used by the resource buyers, the managing server 20 which is used to manage contents of requests from the resource buyers and executing results of the requests, computers 30-1 through 30-n of the resource suppliers, and a network 100 which connects the above elements to one another.

The terminal 10 (suffix omitted) has a function which is similar to a function of the terminal 10 in the first embodiment. That is, the terminal 10 accesses the managing server 20 via the network 100, and can participate in a CPU processing time distribution service provided by the managing server 20. Specifically, each of the terminals 10-1 through 10-m receives a request form to enter items for buying the CPU processing time, from the managing server 20. Then, required items are entered to the request form and the entered items are sent from the terminal to the managing server 20 as request items. Also, the terminal 10 has a function to upload, to the managing server 20, a program which is designated in the request items and is to be executed in the computers 30. Further, the terminal 10 also can refer to or download executing results of the uploaded program, via the network 100.

The managing server 20 is controlled by the service manager and has a function which is similar to a function of the managing server 20 in the first embodiment. That is, the managing server 20 sends the request form to the resource buyer (terminal 10) and stores the request items from the resource buyer into an order table 22 included in a database 21. In this timing, the managing server 20 registers (stores) the uploaded program to be executed in the database 21. Also, the managing server 20 receives from the resource supplier (computer 30) the executing results of the program and stores them in the database 21. Then, the managing server 20 sends the executing results to the resource buyer.

In this embodiment, the managing server 20 further has a function to manage the network address of the computer 30 of the resource supplier and stores them in an address table 23 in the database 21, and a function to access the computer 30 of the resource supplier via the network 100 by using the network address. The managing server 20 is also operable to send the program to be executed to the computer 30.

In addition, the managing server 20 includes a CPU supply condition table 24 in the database 21. The CPU supply condition table 24 includes a CPU supply condition for each computer 30, as will become clear later. The managing server 20 determines one or more computers to process a request by referring to the CPU condition table 24 for each request. Wherein, as a CPU supply condition, an operating system of the computer 30, a time when the computer 30 can start processing, a time when the computer 30 complete the processing, a priority of a working task, an amount of available memory, available directories, an amount of available disk storage, and a minimum fee per a time unit can be defined.

Further, the managing server 20 includes a process history table 25 in the database 21, and the table 25 includes process histories of the program to be executed for each computer 30. The managing server 20 can control priority by using the process history table 25, when the computer 30 which is responsible for executing is determined. That is, the computer 30 is weighted once the computer 30 is determined to execute the program and thereafter, the next computer 30 can be determined in consideration of a priority according to the weighted value of the computer 30.

The computer 30 of the resource supplier is an information processing device which includes a CPU, a memory, and an external storage device, and is connected to the network 100. Also, the computer 30 automatically executes the program which is sent from the managing server 20, and sends back executing results of the program to the managing server 20.

Next, description is made in more detail about operations of the CPU time distribution system according to the second embodiment of the invention, with reference to Figs. 6 and 7.

Also, the following description is made assuming that the network 100 is the Internet. Further, it is assumed that a www browser is running on the terminal 10, information from the managing server 20 is displayed on a monitor by the www browser, thereby the resource buyer can see the received information. Furthermore, it is assumed that the terminal 10 is manipulated by the resource buyer. In this event, it is also assumed that any other person does not manipulates the computer.

That is, operations which are described with a term "terminal 10" as the subject are basically done by instructions (manipulations) of the resource buyer.

Obviously understood from Fig. 2 and Fig. 7, in this embodiment, requesting procedure for requests from the resource buyer to the managing server 20 (step A1 to A5) is the same procedure as shown in Fig. 2. Therefore, description of the procedure will be omitted. Description is made about operations after the procedure, in more detail.

When the resource buyer requests a CPU processing time, the managing server 20 refers to the CPU supply condition table 24 for each computer 30, and compares the CPU supply condition defined in the table 24 with an executing (operating) condition of the program to be actually executed. The managing server 20 selects available computer(s) 30 from the result of the comparison (step D1 in Fig. 7). After the selection, the managing server 20 determines address(es) of the selected computer(s) 30 referring to the address table 23, and sends the program to be executed and a post-processing program to the computer(s) 30 via the network 100 by using the address(es) (step D2). Wherein, the post-processing program is a program which serves to automatically send executing results of the resource buyer's program to be executed by a request from the resource buyer, to the managing server 20 when the execution of the resource buyer's program is completed. The post-processing program can be incorporated into the resource buyer's program, if possible.

As described above, the managing server 20 selects one or more computers 30 according to the number of the computers which is designated by the resource buyer on the request form. And the managing server 20 sends the program to be executed to all the selected computers 30 and stores a process history in the process history table 25 for each computer 30 (step D3). Thereby, in the next selection of the computer 30, a priority based on the process history is considered. For example, the computer 30 currently executing the program can be excluded from a candidate for the next computer 30 which executes the next program.

The computer 30 automatically executes the program which is sent from the managing server 20 (step D4), and then sends back executing results of the program to the managing server 20 (step D5).

When the managing server 20 receives the executing results, the managing server 20 determines for each computer 30 whether the executing results are reasonable or not, and sends a notification of completion of executing program to the terminal 10 of the resource buyer. Description is omitted about the subsequent operations (steps C1 to C5), since they are the same as the first embodiment of the invention.

### [Third Embodiment]

The third embodiment of the CPU processing time distribution system according to the invention is also a variation of the first embodiment of the invention.

In particular, the third embodiment of the invention is coincident with the second embodiment in that the managing server 20 positively requests for execution of a program to the computer 30 when the managing server 20 receives a request for CPU processing time from the resource buyer. But it is different from the second embodiment in a method of selecting the computer 30 executing the program.

That is, in this embodiment, information about the resource buyer who participates in a CPU processing time distribution service is registered to a service manager in advance, in a similar manner to the second embodiment of the invention. Also, a network address of the computer 30 of the registered resource buyer is stored and managed in the managing server 20. Therefore, when the resource buyer sends a request for executing a program to the managing server 20, the managing server 20 can automatically request the execution to a computer of the registered resource supplier even if the resource supplier does not expressly apply an application for the execution.

On the other hand, in the second embodiment, the managing server 20 selects the computer(s) 30 executing the program, but in the third embodiment, an agent program which cyclically moves on the computers on the network selects the computer(s) 30. To this end, it is also required that when the agent program is cyclically moving on the computers of the resource suppliers, each computer can receives the agent program via a network.

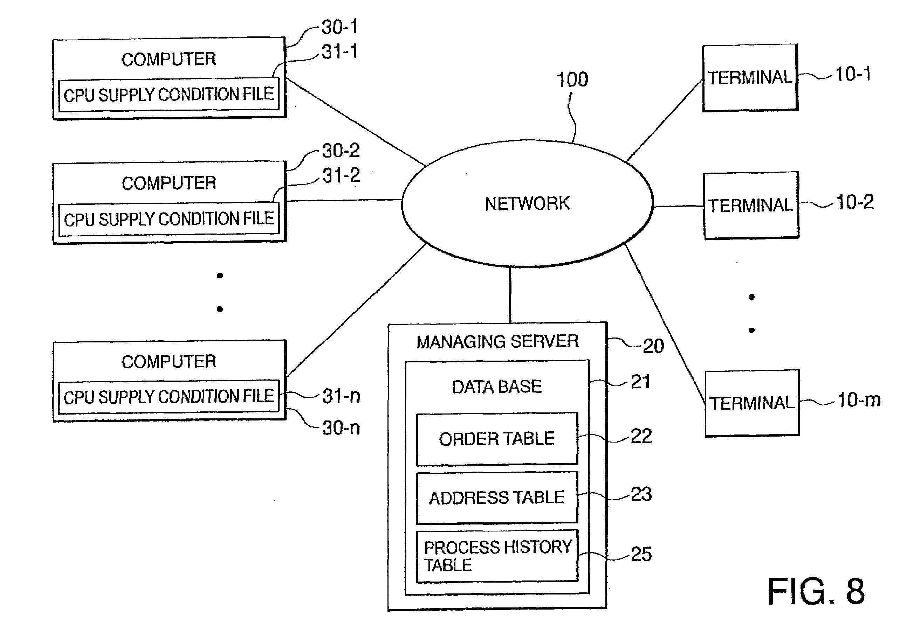

As shown in Fig. 8, the third embodiment of the CPU processing time distribution system includes terminals 10-1 through 10-m which are used by the resource buyers, the managing server 20 which is used to manage contents of requests from the resource buyers and executing results of the requests, computers 30-1 through 30-n of the resource suppliers, and a network 100 which connects the above elements.

The terminal 10 has a function which is similar to a function of the terminal 10 in the first embodiment. That is, the terminal 10 accesses the managing server 20 via the network 100, and can participate in a CPU processing time distribution service provided by the managing server 20. Specifically, each of the terminals 10-1 through 10-m receives a request form to enter items for buying the CPU processing time, from the managing server 20. Then, required items are entered to the request form and the entered items are sent from the terminal to the managing server 20 as request items. Also, the terminal 10 has a function to upload a program which is designated in the request items and is to be executed in the computers 30, to the managing server 20. Further, the terminal 10 also can refer to or download executing results of the uploaded program, via the network 100.

The managing server 20 is controlled by the service manager and has a function which is similar to a function of the managing server 20 in the first embodiment. That is, the managing server 20 sends the request form to the resource buyer (terminal 10) and stores the request items from the resource buyer in an order table 22 in a database 21. In this timing, the managing server 20 registers (stores) the uploaded program to be executed in the database 21. Also, the managing server 20 receives from the resource supplier (computer 30) the executing results of the program and stores them in the database 21. Then, the managing server 20 sends the executing results to the resource buyer.

In addition, the managing server includes an agent program used to request a CPU processing time. The agent program cyclically moves on the computers 30 which are registered to the managing server 20, via the network 100. And the agent program is executed on each of the registered computers 30. In more detail, when the agent program reaches the computer 30 and is executed, the agent program determines whether or not a CPU supply condition of the computer 30 meets a condition of executing the resource buyer's program which is requested to execute by the resource buyer. When it is determined that the resource buyer's program can be executed, the agent program makes the computer 30 execute the resource buyer's program.

Also, in this embodiment, the managing server 20 further has a function to manage the network address of the computer 30 of the resource supplier and stores them in an address table 23 in the database 21, and a function to access the computer 30 of the resource supplier via the network 100 by using the network address and send the resource buyer's program and the above agent program, to the computer 30.

Further, the managing server 20 includes a process history table 25 in the database 21, and the table 25 includes process histories of the resource buyer's program, for each computer 30. The managing server 20 can control priority by using the process history table 25, when the computer 30 which is responsible for executing is determined. That is, the managing server 20 the computer 30 is weighted once the computer 30 is determined to execute the program and thereafter, the next computer 30 can be determined considering a priority according to the weighted value of the computer 30.

The computer 30 of the resource supplier is an information processing device which includes a CPU, a memory, and an external storage device, and is connected to the network 100. Also, the computer 30 automatically executes the agent program which is sent from the managing server 20. When the computer 30 is selected to execute the resource buyer's program by the agent program, the computer 30 automatically executes the resource buyer's program which is sent from the managing server 20. That is, the computer 30 allows the agent program to be executed on the own computer 30, in this sense, the managing server 20 can access the computer 30.

Also, the computer 30 each includes a CPU supply condition file 31. The CPU supply condition file 31 includes a part of information included in the CPU supply condition table 24 in the second embodiment and the part is limited to information only corresponding to the computer 30 including the part. For example, the part includes an operating system of the computer 30, a time when the computer 30 can start processing, a time when the computer 30 complete the processing, a priority of a working task, an amount of available memory, available directories, an amount of available disk storage, and a minimum fee per a time unit. The CPU supply condition file 31 is used by an agent program to request a CPU processing, when the agent program determines what computer can treat the request.

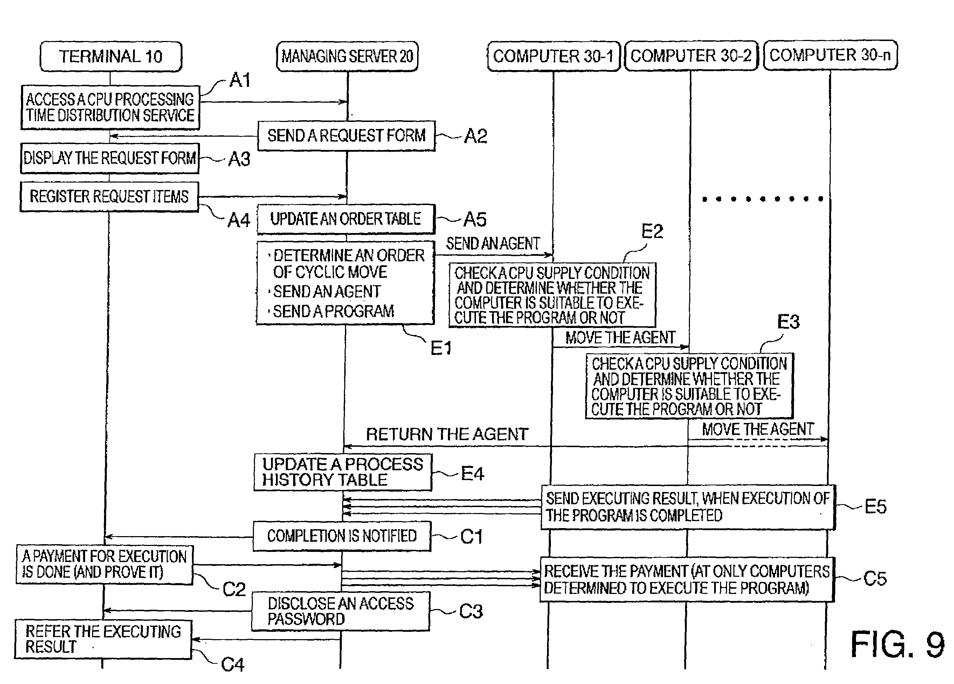

Next, description is made in more detail about operations of the CPU time distribution system according to the third embodiment of the invention, with reference to Figs. 8 and 9.

Also, the following description is made assuming that the network 100 is the Internet. Further, it is assumed that a www browser is running on the terminal 10, information from the managing server 20 is displayed on a monitor by the www browser, thereby the resource buyer can see the received information. Furthermore, it is assumed that the terminal 10 is manipulated by the resource buyer, excepting it is described that the other people manipulates them.

That is, operations which are described with a term "terminal 10" as the subject are basically done by instructions (manipulations) of the resource buyer.

Obviously known from Fig. 2 and Fig. 9, in this embodiment, requesting procedure for requests from the resource buyer to the managing server 20 (step A1 to A5) is the same procedure as shown in Fig. 2. Therefore, description of the procedure will be omitted. Description is made about operations after the procedure, in more detail.

When the resource buyer requests a CPU processing time, the managing server 20 refers to the process history table 25 to obtain a load of each computer 30, and determines an order of computers 30 where the agent program cyclically moves considering the obtained load information. Further, the managing server 20 gets an address of each computers 30 by using the address table 23, and produces cycle information of a list including the addresses of the computers 30 arranged in the determined order. The cycle information is then past to the agent program. In this embodiment, it is assumed that the agent program is determined to cyclically moves, first to the computer 30-1, second to the computer 30-2, third to the computer 30-3, ... and finally to the computer 30-n. Also, in the cycle information of the embodiment, an address of the computer 30-2 is firstly listed and below the address, an address of the computer 30-2 through an address of the computer 30-n are listed in order. Further, below the address of the computer 30-n (that is, at the bottom low in the list), an address of the managing server 20 is listed.

The managing server 20 search the address table 23 for the address of the computer 30-1 and sends the agent program to the computer 30-1 by designating the address (step E1 in Fig. 9). Consequently, the agent program is executed on the computer 30. Also, simultaneously with the sending of the agent program, the managing server 20 may send the post-processing program in a similar manner to the system of the second embodiment. Alternatively, the post-processing program may be included into a program to be executed according to a request of the resource buyer.

The agent program running on the computer 30-1 refers to the CPU supply condition file 31-1, and compares the condition with an executing (operating) condition of the resource buyer's program to be executed to determine whether the computer 30-1 can execute the program designated by the resource buyer's. If the agent program determines that the computer 30-1 can execute the program, the agent program requests the computer 30-1 to execute the program designated by the resource buyer (step E2).

As mentioned above, the cycle information includes the addresses of the computers listed in the cyclic order. By using the cycle information, the agent program cyclically moves over the computers one after another.

In this embodiment, the agent program completing execution on the computer 30-1 then moves to the next computer 30-2 through the network 100, according to the cyclic information. Wherein, the agent program refers to the CPU supply condition file 31-2, and determines whether the computer 30-2 can execute the program designated by the resource buyer. When the agent program determines that the computer 30-2 can execute the program, the argent program requests the computer 30-2 to execute the program designated by the resource buyer (step E3).

Thus, the agent program travels over the computers according to the cyclic information, but it is unnecessary to cyclically move no longer when some computers are selected by the agent program and the number of the selected computers reaches the number which is designated by the resource buyer. Therefore, in this situation, the agent program returns to the managing server 20, the managing server 20 updates the process history table 25 for the computers 3 which are determined to execute the computer designated by the resource buyer, by the agent program (step E4).

Further, when the other resource buyer sends a request for a CPU processing time to the managing server 20, the managing server 20 refers to the process history table 25 in generating the cycle information and establishes a priority of each computer. The priority is reflected on the cyclic order in the cycle information. Also, the computer currently executing the program designated by the former resource buyer can be excluded.

The agent program cyclically moves over the computers according to the cycle information, that is, according to the established priority.

The computer 30 which is determined to be able to execute the program designated by the resource buyer, by the agent program sends, when executing the program is completed, executing results to the managing server 20 (step E5).

When the managing server 20 receives the executing results, the managing server 20 determines for each computer 30 whether the executing results are reasonable or not, and sends a notification of completion of executing program to the terminal 10 of the resource buyer. Description is omitted about the subsequent operations (steps C1 to C5), since they are the same as the first embodiment of the invention.

According to the CPU processing time distribution system of the invention, the resource buyer can be provided with a large amount of CPU time for executing a program from many resource suppliers who possess computers connected to, for example, the Internet. Therefore, the resource buyer can compute an equation which can not compute by his/her computer, at a low cost. To this end, of course, the equation can be divided into some programs for parallel computation or partial computation. For example, the equation may be for a multiple integral or a cipher decryption. Also, the computation of the equation can be performed in a short time since the divided programs are executed simultaneously.

Further, according to the system of the invention, the resource supplier can utilize a CPU ability of own computer and in addition, can get some money by the utilization.

As described above, according to the system of the invention, both the resource buyer and the resource supplier are advantageous by effectively using an unused CPU of a computer of the resource supplier.

## Claims

1. A method of distributing a CPU spare time as a computer resource via a network, comprising the steps of:
displaying, at a terminal of a resource buyer who demands to buy the CPU resource, a request form used to enter request items including an identifier of a program which the resource buyer requires executing;
storing the request items into a database when the request items are entered into the request form;
indicating, at each computer of resource supplier who demands to sell the CPU resource, the request items for each request and allowing the resource supplier to apply for a request; and
providing the program to the computers of the resource supplier in response to the request.

2. The method of claim 1 further comprising the step of:
supplying executing results of the program to the terminal of the resource buyer via the network, after the execution of the program is completed on the computer of the resource supplier.

3. The method of claim 1 further comprising the steps of:
sending information of payment for execution of the program to the terminal of the resource buyer from the computer of the resource supplier; and
supplying executing results of the program to the terminal of the resource buyer, in response to the information of payment.

4. The method of claim 1, wherein the request items further includes at least one of a payment for executing results of the program and a time period of application for the request.

5. A method of distributing a CPU spare time as a computer resource via a network comprising the steps of:
displaying, at a terminal of a resource buyer who demands to buy the CPU resource, a request form used to enter request items including an identifier of a program which the resource buyer requires executing;
storing the request items into a first database when the request items are entered into the request form;
determining resource supplier's computers which are suitable to execute the program, by referring to the first database and a second database including a CPU supply condition and an address of each computer of the resource supplier; and
providing the program to be executed to the determined computers by using the addresses of the computers.

6. A method of distributing a CPU spare time as a computer resource via a network comprising the steps of:
displaying, at a terminal of a resource buyer who demands to buy the CPU resource, a request form used to enter request items including an identifier of a program which the resource buyer requires executing;
storing the request items into a first database when the request items are entered into the request form;
issuing an agent program which cyclically moves over computers of resource suppliers via the network by using addresses of the computers, and which determines the computers which are suitable to execute the program by referring to the first database and a second database which is resided in each computer and includes a CPU supply condition of the corresponding computer; and
providing the program to be executed to the determined computers by using the addresses of the computers.

7. The method of claim 6, wherein the agent program moves over the computers in the predetermined order, and the predetermined order is prepared based on address list of the computers and process history of each computer.

8. A managing server which controls a CPU time distribution service and which is connected to terminals each of which is possessed by a resource buyer and computers each of which is possessed by a resource supplier via a network, in a CPU time distribution system which controls buying and selling of an unused CPU time of the computer by using the network comprising:
a displaying unit which displays a request form, at the terminal, to foster inputting of request items including an identifier of a program which the resource buyer requires executing on the computer;
a database which stores the request items;
an indicating unit which sends the request items to the computers to indicate them;
a receiving unit which receives a response for a request represented by the request items from the computer; and
a providing unit which provides the program to the computer, when the computer sends a notification of an application for the request.

9. The managing server of claim 8 further comprising:
a result supplying unit which supplies executing results of the program to the terminal of the resource buyer via the network, after the execution of the program is completed on the computer of the resource supplier.

10. The managing server of claim 8 further comprising:
a transaction control unit which sends information of payment for execution of the program to the terminal of the resource buyer from the computer of the resource supplier; and which supplies executing results of the program to the terminal of the resource buyer, in response to the information of payment.

11. The managing server of claim 8, wherein the request items further includes at least one of a payment for executing results of the program and a time period of application for the request.

12. A managing server which controls a CPU time distribution service and which is connected to terminals each of which is possessed by a resource buyer and computers each of which is possessed by a resource supplier via a network, in a CPU time distribution system which controls buying and selling of an unused CPU time of the computer by using the network comprising:
a first database which stores, in advance, a CPU supply condition and an address of each computer of the resource supplier;
a displaying unit which displays a request form, at the terminal, to foster inputting of request items including an identifier of a program which the resource buyer requires executing on the computer;
a second database which stores the request items when the request items are entered into the request form;
a determining unit which determines resource supplier's computers which are suitable to execute the program, by referring to the first database and the second database; and
a providing unit which provides the program to be executed to the determined computers by using the addresses of the computers.

13. A managing server which controls a CPU time distribution service and which is connected to terminals each of which is possessed by a resource buyer and computers each of which is possessed by a resource supplier via a network, in a CPU time distribution system which controls buying and selling of an unused CPU time of the computer by using the network comprising:
a first database which stores, in advance, an address of each computer;
a displaying unit which displays, at a terminal, a request form used to foster inputting of request items including an identifier of a program which the resource buyer requires executing on the computer;
a second database which stores the request items when the request items are entered into the request form;
a third database which is resided in each computer and stores a CPU supply condition of the corresponding computer;
an issuing unit which issues an agent program which cyclically moves over computers of resource suppliers via the network by retrieving addresses of the computers from the first database, and which determines the computers which are suitable to execute the program by referring to the second database and the third database; and
a providing unit which provides the program to be executed to the determined computers by using the addresses of the computers.

14. A recording medium readable by a computer, tangibly embodying a program of instructions executable by the computer to perform a method of controlling distribution of a CPU time via a network, the method comprising the steps of:
displaying, at a terminal of a resource buyer who demands to buy the CPU resource, a request form used to enter request items including an identifier of a program which the resource buyer requires executing;
storing the request items into a database when the request items are entered into the request form;
indicating, at each computer of resource supplier who demands to sell the CPU resource, the request items for each request and allowing the resource supplier to apply for a request; and
providing the program to the computers of the resource supplier applying the request.

15. A computer data signal embodied in a carrier wave and representing a sequence of instructions which, when executed by a processor, cause the processor to perform a method of controlling distribution of a CPU time via a network, the method comprising the steps of:
displaying, at a terminal of a resource buyer who demands to buy the CPU resource, a request form used to enter request items including an identifier of a program which the resource buyer requires executing;
storing the request items into a database when the request items are entered into the request form;
indicating, at each computer of resource supplier who demands to sell the CPU resource, the request items for each request and allowing the resource supplier to apply for a request; and
providing the program to the computers of the resource supplier applying the request.

16. A method of distributing (trading) a CPU spare time as a computer resource among a plurality of terminals communicable with one another through a network, comprising the steps of:
finding at least one of the terminals that has the computer resource and that serves as a resource buyer;
finding another one of the terminals that needs the computer resource and that serves as a seller; and
using the computer resource of the resource buyer by the seller through the network.
